# DEMANDE DE BREVET EUROPEEN

(11) **EP 0 559 532 A1**
(43) Date de publication de la demande: **08.09.1993**
(21) Numéro de dépôt: 93400505.9
(22) Date de dépôt: 26.02.1993
(51) Int. Cl.: H04L 9/08

(54) **Dispositif de chiffrement/déchiffrement de données transmises entre les terminaux de télécommunication sur le réseau téléphoniuqe commuté**

(30) Priorité: 02.03.1992 FR 9202467
(71) Demandeur: K T T, F-93541 Bagnolet Cédex (FR)
(72) Inventeur: Lumbroso, Alain, F-95460 Ezanville (FR); de Jabrun, Guilhem, F-94170 Le Perreux sur Marne (FR); Genairon, Pierre, F-94300 Vincennes (FR)
(74) Mandataire: Plaçais, Jean-Yves

(57) **Abrégé**

Le dispositif de chiffrement/déchiffrement de données comprend : une interface ligne (EILTC) branchée au réseau téléphonique commuté (RTC) ; un modem (EMTC1) relié à l'interface ligne (EILTC) ; des moyens de traitement (EUT1) reliés au premier module modem (EMTC1) et propres à traiter les liaisons entre le modem (EMTC1) et l'interface ligne (EILTC) ; une interface ligne (EILEC) branchée au terminal de télécommunication local (TEL1) ; un modem (EMTC2) relié à l'interface ligne (EILEC), les liaisons entre les modems (EMTC1 et EMTC2) étant gérées par les moyens de traitement (EUT1) ; des moyens de traitement (EUT2) reliés au modem (EMTC2), assurant les liaisons entre le modem (EMTC2) et le terminal de télécommunication local et possédant un état de repos et un état actif, pris sur commande spécifique, prédéterminée.

Dans leur état actif, les moyens de traitement (EUT2) procèdent à un déchiffrement ou chiffrement des données provenant du terminal de télécommunication distant en phase réception via le modem (EMTC1) ou adressées à celui-ci en phase émission via le modem (EMTC2), respectivement.

## Description

L'invention se rapporte au chiffrement/déchiffrement de données en télécommunication.

Elle trouve une application en communication du genre télécopie et/ou vidéotex.

Le Demandeur s'est posé le problème de réaliser un dispositif permettant de chiffrer/déchiffrer les messages transmis sur le réseau téléphonique commuté à partir de terminaux de télécommunications classiques en particulier du genre télécopie et/ou vidéotex.

L'invention apporte justement une solution à ce problème.

Ainsi, l'invention porte sur un dispositif de chiffrement/déchiffrement de données pour un terminal de télécommunication local susceptible d'être en liaison avec un terminal de télécommunication distant.

Selon une définition générale de l'invention, le dispositif comprend :
- une première interface ligne branchée au réseau téléphonique commuté ;
- un premier module modem relié à la première interface ligne ;
- des premiers moyens électroniques de traitement reliés au premier module modem et propres à traiter les liaisons entre le premier module modem et la première interface ligne ;
- une seconde interface ligne branchée au terminal de télécommunication local ;
- un second module modem relié à la seconde interface ligne et au premier module modem ; les liaisons entre le premier et le second modules modems étant traitées par les premiers moyens électroniques de traitement ;
- des seconds moyens électroniques de traitement reliés au second module modem, propres à traiter les liaisons entre le second module modem et le terminal de télécommunication local et possédant un état de repos et un état actif, pris sur commande spécifique prédéterminée ; et

dans leur état actif, les seconds moyens électroniques de traitement procèdent à un déchiffrement ou chiffrement des données provenant du terminal de télécommunication distant en phase réception via le premier module modem ou adressées à celui-ci en phase émission via le second module modem, respectivement, le passage des seconds moyens électroniques de traitement à l'état actif s'accompagnant d'une phase de saisie d'une clé secrète à chaque extrémité, suivie d'une phase d'authentification d'une clé de session de chiffrement/déchiffrement commune aux deux extrémités, non échangée entre les deux extrémités et calculée à partir de la clé secrète ainsi saisie.

En pratique, les seconds moyens électroniques de traitement comprennent :
- une mémoire secrète propre à contenir la clé secrète de chiffrement/déchiffrement ;
- des moyens pour recevoir un premier nombre aléatoire provenant du terminal de télécommunication en phase réception ;
- un générateur pour engendrer un second nombre aléatoire ;
- des moyens de calcul pour calculer :
   . une première réponse chiffrée du premier nombre aléatoire par la clé secrète ;
   . une seconde réponse chiffrée du second nombre aléatoire par la clé secrète pour produire un couple constitué de la clé de session et d'un premier mot public ;
   . la somme OU EXCLUSIVE de la première réponse chiffrée et du second nombre aléatoire pour produire un second mot public ; et
- des moyens pour adresser au terminal de télécommunication en phase réception les premier et second mots publics ainsi calculés afin qu'il puisse lui aussi déterminer le couple constitué de la clé de session et du premier mot public en vue d'authentifier ladite clé de cession.

Avantageusement, les seconds moyens de traitement comprennent :
- un module visualisation ; et
- un module clavier pour saisir la clé secrète.

Selon un aspect de l'invention dans lequel le terminal de télécommunication comprend une unité de traitement propre à définir un protocole de communication du type télécopie, les premier et second modules modems sont des modems du type télécopie.

En pratique, les seconds moyens de traitement du dispositif de chiffrement/déchiffrement associé au télécopieur en phase réception modifient le message d'identification dudit télécopieur par introduction du premier nombre aléatoire ;
- à l'autre extrémité, le message d'identification ainsi modifié est traité par les seconds moyens de traitement du dispositif de chiffrement/déchiffrement associé au télécopieur en phase émission pour capturer ledit premier nombre aléatoire ;
- les seconds moyens de traitement du dispositif de chiffrement/déchiffrement associé au télécopieur en phase émission modifient le message d'ordre de communication par introduction des premier et second mots publics calculés par lesdits seconds moyens de traitement à l'aide des premier et second nombres aléatoires et de la clé secrète ;
- le message d'ordre de communication ainsi modifié est traité par les seconds moyens de traitement du dispositif de chiffrement/déchiffrement associé au télécopieur en phase réception pour capturer lesdits premier et second mots publics en vue de déterminer le couple d'authentification constitué de la clé de session et du premier mot public.

Selon une autre caractéristique de l'invention, les données sont chiffrées/déchiffrées à l'aide de la clé secrète et de la clé de session.

Selon un autre mode de réalisation de l'invention dans lequel le terminal de télécommunication comprend une unité de traitement propre à définir un protocole de communication vidéotex, les premier et second modules modems sont du genre vidéotex.

D'autres caractéristiques et avantages de l'invention apparaîtront à la lumière de la description détaillée ci-après et des dessins annexés, dans lesquels :
- la figure 1 décrit schématiquement le branchement du dispositif de chiffrement/déchiffrement selon l'invention sur le réseau téléphonique commuté pour des télécopieurs classiques ;
- la figure 2 est synoptique général du dispositif selon l'invention ;
- la figure 3 est une vue schématique des interfaces lignes selon l'invention ;
- la figure 4 est un organigramme général illustrant le chiffrement/déchiffrement des données en communication du genre télécopie ;
- la figure 5 est un organigramme illustrant la transmission du message d'identification du télécopieur récepteur vers le télécopieur émetteur via les dispositifs de chiffrement/déchiffrement associés auxdits télécopieurs émetteur et récepteur selon l'invention ; et
- la figure 6 est un organigramme détaillé illustrant le passage de l'ordre de communication du télécopieur émetteur vers le télécopieur récepteur via les dispositifs de chiffrement/déchiffrement selon l'invention.

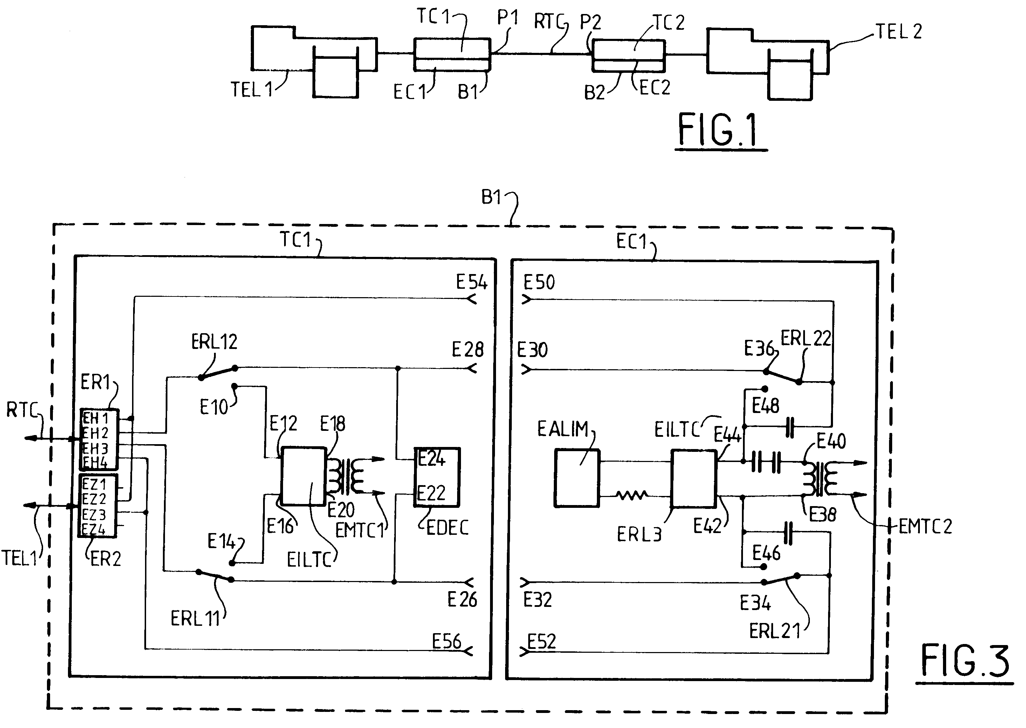

Sur la figure 1, les références B1 et B2 désignent les dispositifs de chiffrement/déchiffrement selon l'invention.

Le dispositif B1 est branché sur le réseau téléphonique commuté RTC au point P1 et est associé à un télécopieur local TEL1.

Symétriquement, le dispositif B2 est branché sur le réseau téléphonique commuté RTC au point P2 et est associé à un télécopieur distant TEL2 susceptible d'être en liaison avec le télécopieur local TEL1 à travers le réseau téléphonique commuté RTC.

Comme on le verra plus en détail ci-après, chaque dispositif B1 et B2 comprend deux cartes : EC et TC individualisées en EC1 et TC1 pour le dispositif B1, et EC2 et TC2 pour le dispositif B2.

Les cartes TC1 et TC2 peuvent prendre place soit dans un micro-ordinateur de type PC, soit dans un boîtier branché sur le réseau téléphonique commuté comme représenté sur la figure 1.

Dans le premier cas, les cartes TC1 et TC2 constituent une version d'une carte d'émulation du genre télécopie.

Dans le second cas, associée à une carte EC, elles constituent l'unité centrale du dispositif selon l'invention.

Brièvement, la carte EC contient tous les éléments spécifiques au chiffrement/déchiffrement des données. Elle comprend notamment un micro-contrôleur dédié au traitement de l'algorithme de chiffrement/déchiffrement. Les cartes EC et TC sont par exemple reliées entre elles par un cordon en nappe de 40 fils.

Lorsqu'elles prennent place dans un boîtier, les deux cartes EC et TC peuvent être fixées l'une par dessus l'autre.

Il est également possible de fixer la carte EC dans le prolongement de la carte TC.

En variante, un ensemble contenant les deux cartes TC et EC mises en juxtaposition peut prendre place dans un micro-ordinateur de type PC et remplir simultanément les fonctions d'une carte classique du genre télécopie et d'un dispositif de chiffrement/déchiffrement selon l'invention.

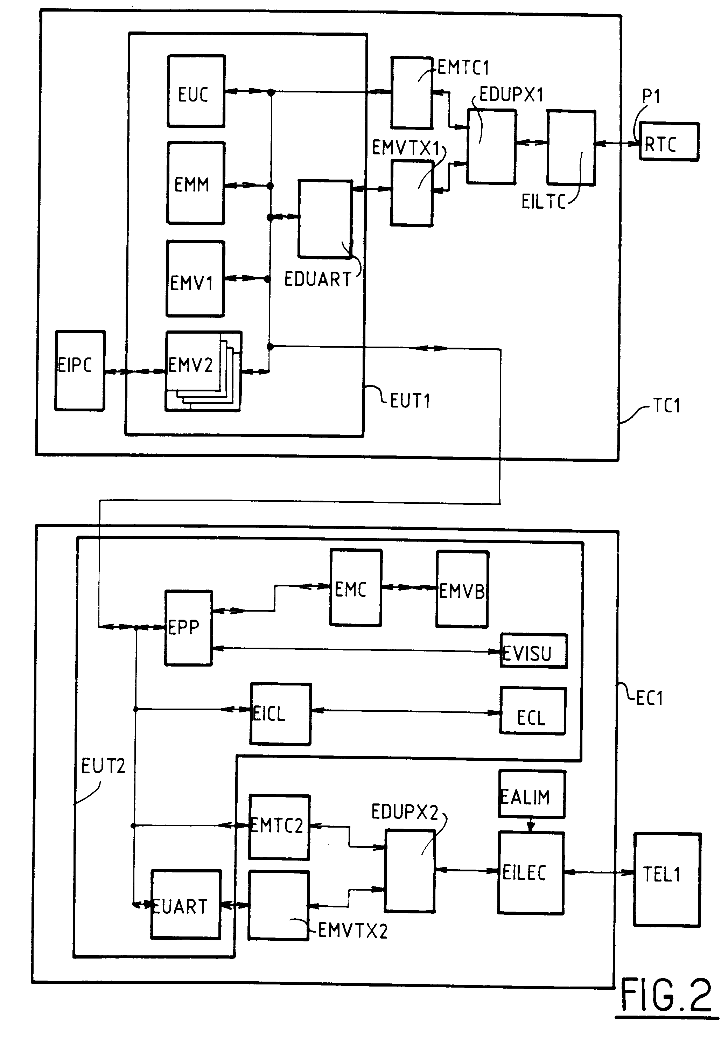

Sur la figure 2, il est représenté la carte EC1 associée au télécopieur TEL1.

Il est à remarquer que la référence de tous les éléments constitutifs de la carte EC1 est précédée de la lettre E pour la différencier de celle des éléments constitutifs de la carte EC2 qui sont identiques à ceux de la carte EC1 et dont la référence est précédée de la lettre R.

La carte EC1 comprend une interface ligne EILEC branchée au télécopieur local TEL1. La carte EC1 est articulée autour d'un micro-contrôleur EMC vendu sous la référence D87C51FC par la Société INTEL (Etats-Unis).

Le micro-contrôleur EMC qui forme l'élément principal des moyens électroniques de traitement EUT2, contient 32 kilo-octets de mémoire morte interne (non représenté) et utilise une mémoire vive EMV3 externe de 32 kilo-octets. La fréquence de l'horloge est de 16 mégahertz.

Avantageusement, la mémoire morte est verrouillée après programmation, ce qui confère un degré de sécurité supplémentaire.

Les éléments essentiels de la carte EC1 sont les suivants :
- un modem EMTC2 du genre télécopie du type par exemple R96EFX vendu par la Société ROCKWELL (Etats-Unis) ;
- un modem EMVTX2 du genre vidéotex du type par exemple TCM3105 vendu par la Société TEXAS INSTRUMENTS (Etats-Unis) ;
- un circuit EUART formant UART vendu sous la référence SCC2691 par la Société ZILOG (Etats-Unis) permettant de piloter le modem vidéotex EMVTX2 ;
- un circuit EPP formant interface entre le micro-contrôleur EMC et le microprocesseur de la carte TC1 d'une part et pilotant les afficheurs EVISU d'autre part. Cette interface est par exemple celle vendue par la Société INTEL sous la référence 82C55 ;
- une interface parallèle EICL pour la gestion d'un clavier ECL de la carte EC1 ; et
- un circuit duplexeur EDUPX2 réalisant l'interface entre l'interface ligne EILEC côté local et les deux modems EMTC2 et EMVTX2.

En pratique, l'interface ligne EILEC regroupe les fonctions suivantes :
- alimentation du dispositif sur une batterie EALIM de 48 volts ou 60 volts ;
- détection du courant de ligne ;
- restitution des polarités côté réseau et le choix du mode chiffrement/déchiffrement ou en clair.

Avantageusement, le clavier ECL est de 16 touches avec 10 touches numérotées de 0 à 9, une touche associée à la validation d'une clé secrète PK que l'on décrira plus en détail ci-après, une touche associée à l'entrée de la clé PK, une touche d'effacement de caractères, une touche d'effacement de la clé PK, une touche concernant le mode en clair ou en chiffre et une touche de consultation de messages.

Les afficheurs EVISU sont par exemple sur 16 caractères. Ils permettent un suivi des opérations pour l'utilisateur. Ils permettent également l'affichage des messages lors d'erreurs de manipulation ou de transmission.

De son côté, la carte TC1 est construite autour d'un microprocesseur EUC du type 80C186 vendu par la Société INTEL (Etats-Unis). Le microprocesseur a par exemple une fréquence d'horloge de 16 mégahertz, et forme l'élément principal des moyens de traitement EUT1.

L'architecture du microprocesseur EUC est complétée par une mémoire morte EMM de 256 kilo-octets en technologie EPROM ou FLASH EPROM (téléchargement). Des mémoires vives de type RAM statique représentées par les mémoires vives EMV1 et EMV2 complètent la structure.

Les moyens de traitement EUT1 peuvent être reliés à un micro-ordinateur du type PC à travers une interface de connexion EIPC.

Un chien de garde (non représenté) permet l'initialisation du système à la mise sous tension et en cas de micro-coupures de l'alimentation.

Un circuit EDUART formant DUART tel que le circuit SCC2692 vendu par la Société ZILOG est associé aux moyens de traitement EUT1.

Le circuit EDUART comprend une liaison série asynchrone, reliée à un modem EMVTX1 du genre vidéotex.

Le modem EMVTX1 du genre vidéotex, par exemple celui du type TCM3105 de TEXAS INSTRUMENTS (Etats-Unis) utilise le canal B du circuit EDUART. Le modem vidéotex est également relié sur la ligne côté réseau commuté.

En pratique, le circuit EDUART permet d'effectuer les fonctions relatives à la programmation des vitesses de transmission du modem vidéotex côté distant et la mise en service de l'émetteur du modem vidéotex côté local ainsi que la gestion de la tension nécessaire lors du téléchargement des circuits de mémoire morte de type FLASH EPROM.

Un modem du genre télécopie EMTC1, par exemple du type R96 EFX vendu par la Société ROCKWELL (Etats-Unis), est relié sur la ligne côté réseau téléphonique commuté RTC au point P1 à travers une interface ligne EILTC.

Un duplexeur EDUPX1 réalise l'interface entre l'interface ligne EILTC et les deux modems EMTC1 et EMVTX1.

Il est à rappeler que c'est le micro-contrôleur EMC de la carte EC1 qui contient un logiciel permettant d'exécuter toutes les fonctions de sécurité relative au chiffrement/déchiffrement des données. Comme on le verra plus en détail ci-après, les fonctions de sécurité sont ici constituées d'une clé de session SK, d'une saisie d'une clé secrète PK, d'une authentification d'un couple constitué de la clé de session SK et d'un mot public V et de la fonction proprement dite de chiffrement/déchiffrement.

En pratique, le logiciel de sécurité est contenu dans une mémoire morte interne au micro-contrôleur EMC.

De son côté, le microprocesseur EUC de la carte TC1 exécute les autres fonctions (c'est-à-dire toutes excepté celles qui sont liées à la sécurité). Par exemple, il exécute les fonctions relatives à la gestion des interfaces téléphoniques côté ligne et côté télécopieur, celles relatives à la gestion des deux modems du genre télécopie et/ou vidéotex en ligne, celles relatives à l'interface homme machine et celles relatives à la gestion du protocole de communication du genre télécopie et/ou du genre vidéotex.

Il est à noter que le dispositif de chiffrement/déchiffrement selon l'invention se branche en coupure sur la ligne téléphonique, c'est-à-dire sur le réseau téléphonique commuté entre le télécopieur et le réseau téléphonique commuté. Il permet une transmission en chiffre ou en clair suivant qu'une commande spécifique prédéterminée est actionnée par exemple qu'une clé secrète PK a été introduite ou non à partir du clavier ECL du dispositif.

En pratique, le dispositif de chiffrement/déchiffrement selon l'invention n'intervient sur la ligne qu'après établissement de la communication. Ainsi, l'établissement de la communication, la gestion des réappels et l'absence de papier en réception sont gérés par le télécopieur adjoint.

De préférence, si la communication est en clair, le dispositif de chiffrement/déchiffrement selon l'invention n'intervient pas.

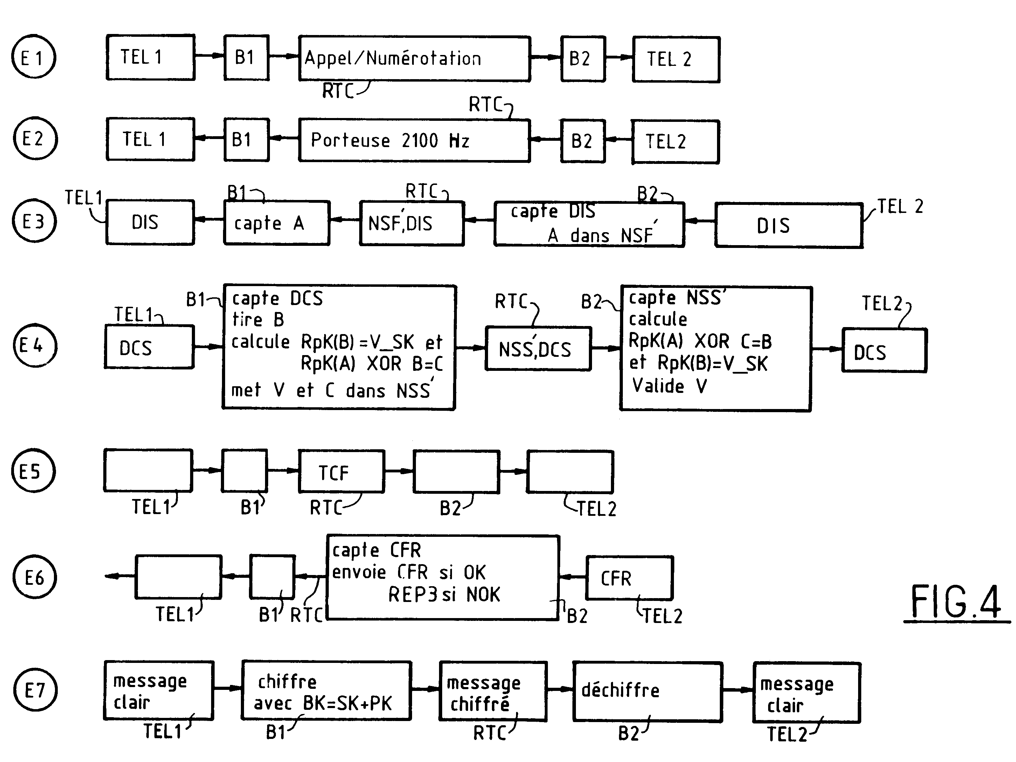

Sur la figure 3, la référence ER1 désigne une prise téléphonique à quatre contacts EH1 à EH4 reliée au réseau RTC, tandis que la référence ER2 désigne une prise téléphonique à quatre contacts EZ1 à EZ4 reliée au télécopieur adjoint, ici le télécopieur TEL1.

Des relais ERL11 et ERL12 placés sur la carte TC1 et des relais ERL21 et ERL22 placés sur la carte EC1 permettent d'établir des liaisons entre RTC et EILTC via les points EH2, E10, E12 et EH3, E14, E16, entre EILTC et EMTC1 via les points E18 et E20, entre EMTC1 et EMTC2 via les points E22, E26, E32, E34, E38 et E24, E28, E30, E36, E40, entre EMTC2 et EILTC via les points E42 et E44 et entre EILtC et TEL1 via les points E42, E46, E52, E56, EZ3 et E44, E48, E50, E54, EZ2. Il est à noter que la carte TC1 est équipée d'un élément EDEC pour la détection de la sonnerie. L'alimentation EALIM est placée sur la carte EC1.

Un relais ERL3 assure la fonction de commutation du sens d'alimentation côté local en fonction de la polarité de l'alimentation côté réseau.

Nous allons illustrer maintenant le fonctionnement du dispositif selon l'invention en référence à la figure 4.

Nous nous plaçons ici dans le cas où l'émetteur souhaite réaliser une transmission chiffrée.

Dans l'étape E1, le télécopieur émetteur TEL1 émet un message d'appel/numérotation qui est acheminé au télécopieur récepteur TEL2 via le dispositif B1, le réseau RTC et le dispositif B2.

Conformément à l'étape E2, en réponse au message d'appel/numérotation, le télécopieur récepteur TEL2 envoie une porteuse de 2100 Hertz au télécopieur TEL1 via B2, RTC et B1.

Côté émetteur, le télécopieur TEL1 détecte la porteuse. En réponse à la porteuse, le modem télécopie du télécopieur TEL1 est actionné pour interception des messages.

Conformément à l'étape E3, le télécopieur TEL2 envoie le message d'identification DIS pour Digital Identification Signal en protocole télécopie standard.

Le modem du genre télécopie RMTC2 de la carte EC2 du boîtier B2 détecte la porteuse à 2100 Hertz transmise par TEL2.

Les relais RRL21 et RRL22 de l'interface ligne RILEC de la carte EC2, sont alors basculés afin que le modem RMTC2 puisse capter le message DIS provenant de TEL2 et le modifier via les points RZ2, R54, R50, R48, R40 et RZ3, R56, R52, R46, R38.

Nous rappelons que la lettre R sert à désigner les éléments constitutifs du boîtier B2 tandis que la lettre E désigne les éléments constitutifs du boîtier B1 homologue et identique à B2.

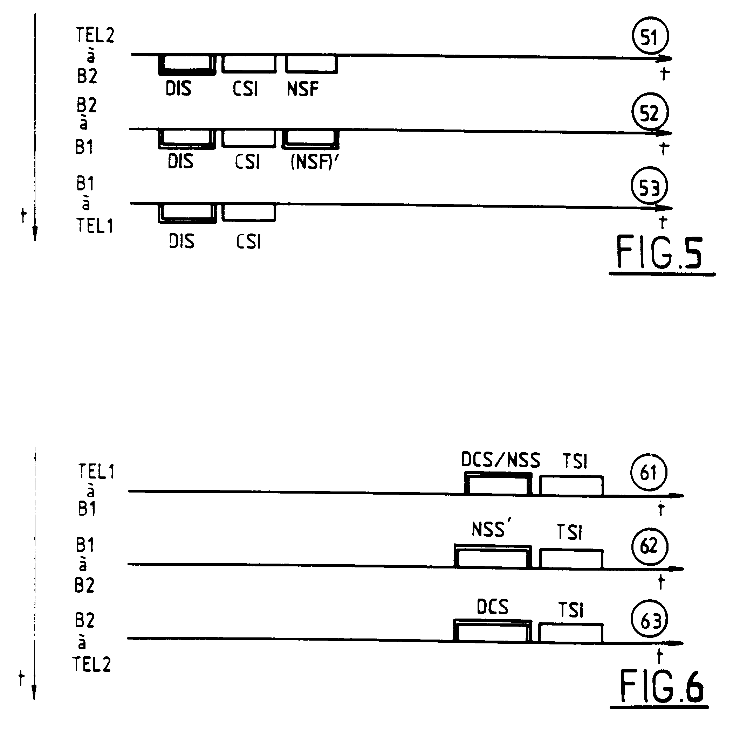

Sur la figure 5, il est représenté l'échange de la trame DIS entre TEL2 et TEL1 via B2, RTC et B1.

Selon l'étape 51, TEL2 envoie au modem RMTC2 la trame DIS précédé éventuellement d'une trame CIS pour "Called Identification Signal" et d'une trame NSF pour "Non Standard Facilities".

Dans l'étape 52, le modem RMTC2 de la carte EC2 du boîtier B2 modifie la trame DIS pour y introduire un nombre aléatoire A généré par le micro-contrôleur RMC.

Il est à remarquer que la trame DIS selon son format contient ou ne contient pas de trame NSF.

Dans le cas où la trame DIS initiale ne contient pas de trame NSF, la trame globale DIS est rallongée d'une trame NSF' de 21 octets (c'est-à-dire une trame d'une durée de 560 milli-secondes à la vitesse V21 de 300 bits/seconde) et d'une intertrame d'une cinquantaine de millisecondes, soit au total 650 millisecondes au maximum.

Dans le cas où la trame DIS initiale comporte déjà une trame NSF, celle-ci est remplacée par la trame NSF'.

Dans tous les cas, c'est la nouvelle trame NSF' qui contient le nombre aléatoire A.

Par exemple le nombre aléatoire A est sur 8 octets.

Ensuite, la nouvelle trame NSF', la trame DIS et le cas échéant la trame CIS sont envoyées sur le RTC par le modem RMTC1 de la carte TC2 du boîtier B2 (étape 52).

Pour cela, les relais RRL12 et RRL11 sont positionnés de manière à ce que la liaison entre RMTC1 et RTC soit établie via RILTC à travers les points R18, R12, R10, RH2 et R20, R16, R14, RH3.

A l'autre extrémité du RTC, si la carte EC1 du boîtier B1 reconnaît la trame NSF indiquant une tentative de transmission chiffrée, la carte EC1 entre dans une phase d'authentification selon l'invention et de mise à la clé automatique.

Plus précisément, le modem EMTC1 du boîtier B1 capte la nouvelle trame NSF' et laisse passer le DIS qui est acheminé au télécopieur TEL1 avec éventuellement la trame CIS (étape 53).

Ensuite, le télécopieur TEL1 analyse le DIS ainsi acheminé et le CIS le cas échéant.

Nous revenons à la figure 4.

Conformément à l'étape E4, en réponse au DIS ainsi reçu, le télécopieur TEL1 émet un ordre de communication DCS pour Digital Command Signal qui est intercepté par le modem EMTC2 de la carte EC1 du boîtier B1 via les points EZ2, E54, E50, E48, E40 et EZ3, E26, E32, E34, E38.

Il est à remarquer que l'ordre de communication DCS peut être remplacé par d'une trame NSS pour "Non Standard Set-up" et une trame TSI pour "Transmitting Subscriber Identification" (figure 6, étape 61).

La carte EC1 applique alors l'algorithme de chiffrement/déchiffrement selon l'invention.

Plus précisément, EC1 génère tout d'abord un second nombre aléatoire B.

Ensuite, le micro-contrôleur EMC calcule la réponse chiffrée du second nombre aléatoire B par la clé secrète PK pour produire un couple d'authentification constitué d'un premier mot public V et d'une clé de session SK.

Par exemple, la clé secrète PK est sur 8 bits, la clé SK sur 4 bits et le mot public V sur 4 bits.

Par ailleurs, le micro-contrôleur EMC calcule la somme OU EXCLUSIVE de la réponse chiffrée du premier nombre aléatoire A par la clé secrète PK et du second nombre aléatoire B pour produire un second mot public C.

Enfin, EMC met les premier et second mots publics V et C dans l'ordre de communication DCS.

Plus précisément, EMC substitue une trame NSS' (figure 6, étape 62) à la trame DCS ou NSS du télécopieur émetteur TEL1. Cette nouvelle trame NSS' comporte alors 16 octets supplémentaires pour y introduire les mots publics V et C.

Ensuite, la trame TSI et la nouvelle trame NSS' sont envoyées sur le RTC par le modem EMTC1 de la carte TC1 du boîtier B1.

En pratique, la nouvelle trame NSS' nécessite pour être acheminée via le RTC du boîtier B1 vers le boîtier B2 un délai de transmission de 427 millisecondes à 300 bits/seconde.

Conformément à l'étape 63 décrite en référence à la figure 6, la carte EC2 du boîtier B2 substitue à la trame NSS' une trame DCS, où les octets privés (c'est-à-dire ceux réservés à V et C) sont remis à zéro.

La carte EC2 du boîtier B2 applique alors la suite de l'algorithme de chiffrement/déchiffrement selon l'invention.

Plus précisément, le micro-contrôleur RMC calcule la somme OU EXCLUSIVE de la réponse chiffrée du premier nombre aléatoire A par la clé secrète PK et du mot public C pour produire le second nombre aléatoire B.

Par ailleurs, RMC calcule la réponse chiffrée dudit second nombre aléatoire B ainsi produit par la clé secrète PK pour produire le couple d'authentification V et SK.

Enfin, RMC compare le mot V ainsi calculé et le mot V extrait de NSS'.

Si la comparaison est positive, l'authentification de la clé SK est établie. Le boîtier B2 envoie le DCS au télécopieur TEL2 via le modem RMTC2, et la suite de la communication passe à travers le boîtier B2 du modem RMTC1 au modem RMTC2.

En pratique, le boîtier B2 laisse passer la réponse donnée par le télécopieur TEL2 à la séquence de training TCF (étape E5).

Si la qualité de la ligne est bonne, le boîtier B2 laisse passer le signal CFR pour Confirmation For Receive. Par contre, si la qualité de la ligne est déclarée mauvaise, le boîtier B2 laisse passer un signal FTT pour "Failure To Train" (étape E6).

Il est à observer qu'en cas d'échec dans l'étape d'authentification mentionnée ci-avant, le DCS est aussi transmis au télécopieur TEL2 mais le boîtier B2 intercepte la réponse du télécopieur TEL2 à TCF pour la remplacer par une commande spécifique REP3.

Conformément à l'étape E7, en cas de déroulement correct de la phase d'authentification, après réception d'une réponse CFR, la transmission chiffrée a lieu. Le message provenant du télécopieur émetteur TEL1 est prélevé par le modem EMTC2, chiffré au niveau du contrôleur EMC par une clé de chiffrement BK, et réinjecté chiffré sur la ligne par le modem EMTC1.

En fin de page, une éventuelle commande indiquant du multipage est remplacée par une autre commande pour que les télécopieurs repartent en protocole et qu'une nouvelle clé réelle soit calculée entre chaque page.

Si la phase d'authentification échoue ou présente une difficulté, le boîtier selon l'invention renvoie une commande REP3 et il y a déconnexion.

Si la carte EC1 ne reconnaît pas de code indiquant la présence à l'autre bout d'un boîtier de chiffrement/déchiffrement selon l'invention, la communication est interrompue par l'envoi d'une commande DCN pour "Disconnect" après échange des identifiants.

Il est à remarquer que, si le télécopieur émetteur B1 n'a pas de boîtier de chiffrement/déchiffrement, le boîtier récepteur B2 se retire virtuellement, c'est-à-dire qu'un relai est ouvert afin que les signaux ne soient pas modifiés dans le boîtier B2. Le boîtier B2 reste alors transparent pour la suite de la communication, ce qui permet à un télécopieur récepteur de recevoir des messages en clair même s'il est dans une position en chiffre.

A partir de la mise sous tension du boîtier, le nombre d'appels entrant qui n'aboutissent pas peut être mémorisé. Cette information peut être visualisée sur l'écran du boîtier en tapant la touche "consultation appel erroné" . Dans ce cas apparaît le message "appel erroné" etc. Les appels considérés comme erronés sont les suivants :
- tentative de transmission en chiffre avec une clé différente de celle du boîtier ;
- tentative de transmission en chiffre sur un boîtier en position en clair.

Ainsi, la phase d'authentification mentionnée ci-avant permet de vérifier que les deux extrémités partagent une même clé secrète PK préalablement introduite dans chaque extrémité.

Cette phase d'authentification est basée sur l'échange de mots publics V et C et sur le calcul d'une clé de session SK qui ne transite jamais entre les deux extrémités.

En pratique, la clé de chiffrement proprement dite BK est constituée d'un mélange de la clé de session SK et de la clé personnelle secrète PK. L'algorithme de chiffrement est avantageusement du type DES.

Le brassage des clés PK et SK est une procédure de type mélange dans laquelle la clé PK est sur 8 octets, la clé SK est une clé de session partagée sur 4 octets et la clé de base BK est sur 8 octets.

Il est à remarquer que la clé réelle de chiffrement BK est donc diversifiée à chaque nouvelle session et entre chaque page. En effet, même si la clé secrète PK reste constante, la clé BK prend une valeur différente. Une conséquence importante en terme de sécurité est que le même message envoyé lors de deux sessions différentes et avec la même clé secrète PK sera chiffré différemment. L'observation passive du trafic chiffré donc à l'insu de l'expéditeur ne donne en effet aucune information sur la nature des messages.

Il est à remarquer que la clé de session SK n'est pas transmise en ligne puisqu'elle est calculée indépendamment aux deux extrémités de la liaison. Il s'agit donc d'un secret partagé entre les deux extrémités et dont la durée de vie est celle de la transmission d'une page. Il est à remarquer que l'avantage du protocole de mise à la clé ci-dessus est que l'on permet à l'utilisateur de chiffrer ses messages avec une clé complexe BK tout en lui demandant de se souvenir d'une clé simple PK sur huit chiffres équivalents par exemple à un numéro de téléphone.

Dans le cas de transmissions entre deux télécopieurs de même nature pouvant disposer d'un protocole privé, les boîtiers selon l'invention peuvent être également utilisés pour une transmission en chiffre. En effet, le protocole étant filtré de chaque côté par les boîtier selon l'invention, ceux-ci peuvent restituer des commandes télécopies de type standard lors de l'échange des identifiants.

Une clé de 4 octets CK peut intervenir également dans la procédure de brassage. Par défaut, cette clé est fixée à une valeur de référence. L'utilisateur a ainsi en option la possibilité de demander une personnalisation de son jeu de boîtiers.

En pratique, le boîtier selon l'invention possède une clé de verrouillage qui permet à l'utilisateur de bloquer le boîtier dans l'état où il est, c'est-à-dire en position en clair si aucune clé n'a été introduite ou en position chiffre lorsque l'utilisateur introduit sa clé personnelle PK. Dans ce dernier cas, le télécopieur peut néanmoins toujours recevoir des télécopies en clair.

Lorsque le boîtier n'est pas verrouillé, la durée de vie de la clé PK introduite au clavier est limitée : elle est effacée à la fin de chaque communication ou au bout de 10 minutes par exemple s'il n'y a pas eu de transmission.

La clé de verrouillage est contrôlée par le microprocesseur de la carte TC.

En ce qui concerne les caractéristiques mécaniques du dispositif, sur sa face arrière on trouve une prise d'alimentation sur laquelle on raccorde le transformateur, et une prise téléphonique qui permet de raccorder le boîtier entre le télécopieur adjoint et éventuellement le terminal Minitel d'une part et le réseau téléphonique commuté d'autre part à l'aide d'une prise gigogne du type Minitel.

Il est à remarquer ici que la description porte sur la communication du genre télécopie. Toutefois les boîtiers selon l'invention s'appliquent également au chiffrement/déchiffrement des données en communication vidéotex. Plus précisément, ce qui a été décrit pour les modems MTC1 et MTC2 s'applique mutatis mutandis pour les modems MVTX1 et MVTX2 avec bien entendu le protocole vidéotex ad hoc.

## Revendications

1. Dispositif de chiffrement/déchiffrement de données pour un terminal de télécommunication local susceptible d'être en liaison avec un terminal de télécommunication distant, caractérisé en ce qu'il comprend :
- une première interface ligne (EILTC) branchée au réseau téléphonique commuté (RTC) ;
- un premier module modem (EMTC1) relié à la première interface ligne (EILTC) ;
- des premiers moyens électroniques de traitement (EUT1) reliés au premier module modem (EMTC1) et propres à traiter les liaisons entre le premier module modem (EMTC1) et la première interface ligne (EILTC) ;
- une seconde interface ligne (EILEC) branchée au terminal de télécommunication local (TEL1) ;
- un second module modem (EMTC2) relié à la seconde interface ligne (EILEC), les liaisons entre les premier et second modules modems (EMTC1 et EMTC2) étant gérées par les premiers moyens électroniques de traitement ;
- des seconds moyens électroniques de traitement (EUT2) reliés au second module modem (EMTC2), assurant les liaisons entre le second module modem (EMTC2) et le terminal de télécommunication local et possédant un état de repos et un état actif, pris sur commande spécifique, prédéterminée ;
- et en ce que dans leur état actif, les seconds moyens électroniques de traitement (EUT2) procèdent à un déchiffrement ou chiffrement des données provenant du terminal de télécommunication distant en phase réception via le premier module modem (EMTC1) ou adressées à celui-ci en phase émission via le second module modem (EMTC2), respectivement, le passage des seconds moyens électroniques de traitement à l'état actif s'accompagnant d'une phase de saisie d'une clé secrète (PK) à chaque extrémité, suivie d'une phase d'authentification d'une clé session de chiffrement/déchiffrement (SK) commune aux deux extrémités, non échangée entre lesdites extrémités et calculée à partir de la clé secrète (PK) ainsi saisie.

2. Dispositif selon la revendication 1, caractérisé en ce que les seconds moyens électroniques de traitement (EUT2) comprennent :
- une mémoire secrète propre à contenir la clé secrète (PK) de chiffrement/déchiffrement ;
- des moyens pour recevoir un premier nombre aléatoire (A) provenant du terminal de télécommunication en phase réception ;
- un générateur pour engendrer un second nombre aléatoire (B) ;
- des moyens de calcul pour calculer :
. une première réponse chiffrée du premier nombre aléatoire (A) par la clé secrète (PK) ;
. une seconde réponse chiffrée du second nombre aléatoire (B) par la clé secrète (PK) pour produire un couple constitué de la clé de session (SK) et d'un premier mot public (V) ;
. la somme OU EXCLUSIVE de la première réponse chiffrée et du second nombre aléatoire (B) pour produire un second mot public (c) ;
- des moyens pour adresser au terminal de télécommunication récepteur les deux mots publics ainsi calculés (C et V) afin qu'il puisse lui aussi déterminer le couple en vue d'authentifier la clé de session (SK).

3. Dispositif selon l'une quelconque des revendications précédentes, caractérisé en ce que les seconds moyens de traitement comprennent en outre un module visualisation (EVISU) et un module clavier (ECL) pour saisir la clé secrète (PK).

4. Dispositif selon l'une quelconque des revendications précédentes dans lequel le terminal de télécommunication comprend une unité de traitement propre à définir un protocole de communication du genre télécopie, caractérisé en ce que les premier et second modules modems (EMTC1 et EMTC2) sont des modems du type télécopie.

5. Dispositif selon la revendication 4, caractérisé en ce que
- les seconds moyens de traitement du dispositif associé au télécopieur récepteur modifient le message d'identification (NSF) par introduction du premier nombre aléatoire (A) ;
- à l'autre extrémité, le message d'identification (NSF') ainsi modifié est traité par les seconds moyens de traitement du dispositif associé au télécopieur émetteur pour capturer ledit premier nombre aléatoire (A) ;
- les seconds moyens de traitement du dispositif associé au télécopieur émetteur, modifient le message d'ordre de communication (NSS) par introduction des premier et second mots publics (V et C) calculés par lesdits seconds moyens de traitement à l'aide des premier et second nombres aléatoires (A et B) et de la clé secrète (PK) ;
- le message d'ordre de communication (NSS'), ainsi modifié est traité par les seconds moyens de traitement associés au télécopieur récepteur pour capturer lesdits mots publics (C et V)en vue de déterminer le couple (SK et V) pour authentifier la clé de session (SK).

6. Dispositif selon l'une quelconque des revendications précédentes, caractérisé en ce que les données sont chiffrées/ déchiffrées à l'aide de la clé secrète (PK) et de la clé de session (SK).

7. Dispositif selon l'une quelconque des revendications précédentes dans lequel le terminal de télécommunication comprend une unité de traitement propre à définir un protocole du genre vidéotex, caractérisé en ce que les premier et second modules modems (EMVTX1 et EMVTX2) sont du type vidéotex.
